# FASCICULE DE BREVET EUROPEEN

(11) **EP 0 434 108 B1**
(45) Date de publication et mention de la délivrance du brevet: **10.01.1996**
(21) Numéro de dépôt: 90203067.5
(22) Date de dépôt: 20.11.1990
(51) Int. Cl.: C03B 9/40, C03B 9/16, C03B 9/193

(54) **Distributeur électropneumatique destiné aux machines pour la réalisation d'objets creux en verre**
Elektropneumatischer Verteiler für Maschinen zum Herstellen von Hohlglasgegenständen
Electro-pneumatic distributor for machines for making hollow glass objects

(30) Priorité: 21.12.1989 IT 8569689
(43) Date de publication de la demande: 26.06.1991
(73) Titulaire: BDF-BOSCATO & DALLA FONTANA s.p.a., I-36100 Vicenza (IT)
(72) Inventeur: Dalla Fontana, Adamo, Dr., Vicenza (IT)
(74) Mandataire: Bettello, Luigi, Dott. Ing.

(56) Documents cités:
- EP-A- 0 014 942
- FR-A- 2 189 329
- FR-A- 2 362 084
- US-A- 3 918 489

## Description

La présente invention a pour objet un distributeur électro-pneumatique propre à commander le fonctionnement des mécanismes de formation et de manipulation d'une machine pour la réalisation d'objets creux en verre, du type connu sous la dénomination "I.S.".

Les machines de ce type sont traditionnellement commandées mécaniquement à l'aide d'un programmateur à tambour mécanique dans lequel sont habituellement montés 19 à 21 poussoires qui, par le moyen d'un système de leviers, actionnent les vannes pneumatiques correspondantes, lesquelles alimentent à leur tour le mécanisme pneumatique conjugué.

Avec le développement des machines de ce genre, on est passé d'un programmateur à tambour mécanique à un programmateur électronique, apte à piloter jusqu'à 21 électro-vannes rassemblées dans un bloc unique de vannes. Un distributeur de commande perfectionné de ce type a été proposé en 1974 par la présente Demanderesse, en vue d'être substitué à celui de type mécano-pneumatique à leviers et poussoirs.

Le distributeur électro-pneumatique mentionné ci-dessus était constitué par trois groupes de sept électro-vannes; chacune de celles-ci était montée sur trois collecteurs indépendants ayant pour fonction d'envoyer l'air aux sept vannes et de distribuer aux vannes de réglage l'air d'utilisation.

Dans le document FR-A-2362084 on parle de trois blocs pneumatiques, le premier apte à recevoir les distributeurs pneumatiques, le deuxième apte à recevoir les électrovannes de commande des dites distributeurs pneumatiques et le troisièmme qui comprend tous les electrovannes regulatrices des fluxes d'air.

La nécessité de rendre plus compact le distributeur et de lui apporter des perfectionnements a suscité le développement d'un nouveau type d'appareil.

L'objet de la présente invention est défini à la revendication 1.

Il comprend une série de vannes pneumatiques, préférablement au nombre de vingt et un et disposées suivant deux rangées horizontales comprenant respectivement dix et onze vannes, et ce à l'intérieur d'une pièce unique qui renferme, en plus des vannes, une chambre commune d'alimentation qui communique avec toute les lumières d'alimentation des vannes pneumatiques, et une chambre de refoulement qui communique avec toutes les lumières de refoulement de celles-ci.

Dans cette même pièce sont en outre prévus tous les passages pour l'air destiné à l'utilistion et à la commande des vannes pneumatiques.

Une seconde pièce, reliée à la première, peut renfermer toutes les vannes pour le réglage des circuits d'utilisation et de refoulement des vannes pneumatiques, ce qui a pour effet de rassembler tous les réglages dans une seule pièce séparée de celle qui renferme les vannes électro-pneumatiques.

Dans la pièce principale renfermant les deux rangées opposées de vannes pneumatiques est en outre logée la série, par exemple au nombre de vingt et un, des électro-vannes aptes à assurer la commande du fonctionnement des vannes pneumatiques.

Les vannes pneumatiques, du type à tiroir avec étanchéité par obturateur, qui étaient précédemment montées en position horizontale, sont ici logées en position verticale de façon à assurer un fonctionnement équilibré du tiroir, avec une usure réduite au cours de l'utilisation. Avantageusement les larges passages d'air permettent des pertes de charge réduites tout en conférant la possibilité d'actionner directement les mécanismes pneumatiques pour la formation et la manipulation du verre fondu.

Dans la partie frontale du distributeur peut être prévu un nombre correspondant de commandes manuel les destinées à l'actionnement de chacune des vannes pneumatiques ; ces commandes agissent de manière directe sur la tige de l'électro-vanne correspondante, en mettant en communication le collecteur d'air de commande et le petit vérin d'actionnement de la vanne à tiroir. L'opération manuelle d'ouverture ou de fermeture de cette vanne amène automatiquement en sécurité le distributeur par l'intermédiaire de l'actionnement d'un micro-interrupteur. De cette manière, les signaux électriques de commande envoyés aux électro-vannes sont interceptés, en interdisant de la sorte l'actionrement des vannes pneumatiques durant le temps d'une commande manuelle.

Un autre avantage obtenu grâce à la présente invention réside dans la facilité de surveiller chaque vanne à tiroir au moyen d'un couvercle prévu à l'extrémité supérieure de celle-ci. Ce couvercle ferme la cavité cylindrique à l'intérieur de laquelle est logée la vanne et il est propre à être enlevé pour faciliter le démontage de la vanne à tiroir.

Avec ce système, il est possible d'intervenir sur chaque vanne sans avoir à démonter les parties communes du distributeur. Par ailleurs, étant tous placés à la partie supérieure du bloc et étant eux-mêmes réalisés en acier, ces couvercles font en outre fonction de plan d'appui pour des outils éventuels destinés à être utilisés au niveau de la machine.

Selon l'invention les vannes à tiroir sont disposées suivant deux rangées longitudinales par rapport au bloc, chacune de ces vannes étant orientée verticalement et étant pourvue d'une lumière d'alimentation, d'une lumière d'utilisation et d'une lumière de refoulement. Une mode préférée de l'invention propose en fait la réalisation d'un distributeur comprenant deux pièces ; une pièce renferme les vannes à tiroir, le collecteur d'air d'alimentation, le collecteur d'air de refoulement, le collecteur d'air de commande, les passages pour l'entrée et le refoulement de l'air destiné à l'utilisation, les électro-vannes d'actionnement, les commandes manuelles et les micro-interrupteurs de sécurité, tandis que l'autre pièce supporte les réglages destinés à l'entrée et au refoulement de l'air d'utilisation commandé par la vanne.

Chaque vanne à tiroir est équipée d'une électro-vanne destinée à sa commande moyennant envoi d'une impulsion d'air d'actionnement. Dans la pièce porte-vannes sont en outre prévus les collecteurs d'air d'alimentation, d'air de refoulement et d'air pour l'actionnement des vannes.

L'alimentation des vannes de la rangée interne peut être directement assurée de manière individuelle, sans prélever l'air du collecteur commun, tandis que les vannes de la rangée externe peuvent être alimentées directement par paires, en vue de permettre le travail à des pressions d'utilisation différentes.

Afin de mieux illustrer la présente invention, on se réfèrera au dessin schématique annexé dans lequel :
- la fig. 1 est une vue en plan du distributeur ;
- la fig. 2 en est une coupe partielle suivant le plan indiqué en II-II en fig. 1.

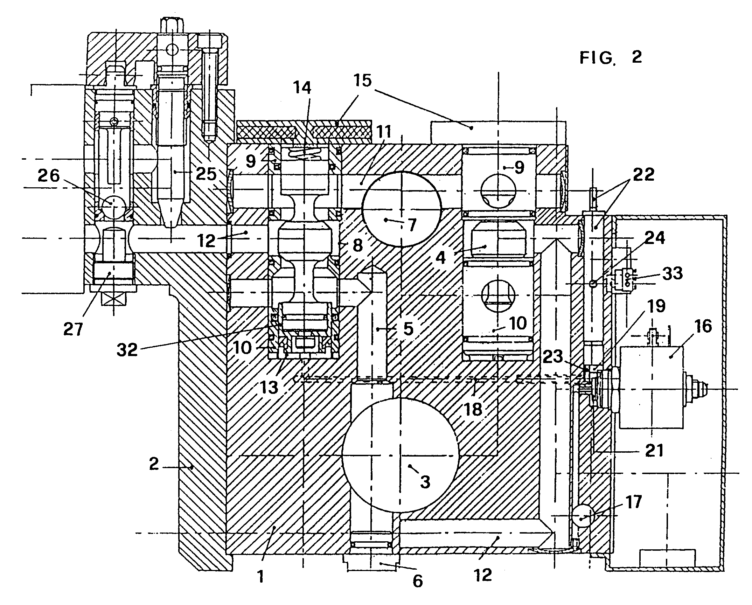

En fig. 2, on peut clairement voir les deux parties fondamentales qui forment le distributeur, à savoir la pièce 1 qui constitue l'ensemble équipé des vannes à tiroirs avec les collecteurs d'air, et la pièce 2 qui est l'ensemble supportant les vannes de réglage.

Sur la pièce 1 sont disposées verticalement par exemple vingt et une vannes pneumatiques à tiroir montées suivant deux rangées longitudinales décalées d'une valeur égale à la moitié de la largeur d'une vanne, de façon à ce que dans la rangée intérieure (visible à gauche en fig. 2) trouvent place par exemple onze corps de vanne, tandis que dans la rangée extérieure (visible à droite en fig. 2) sont prévus par exemple dix corps de vanne.

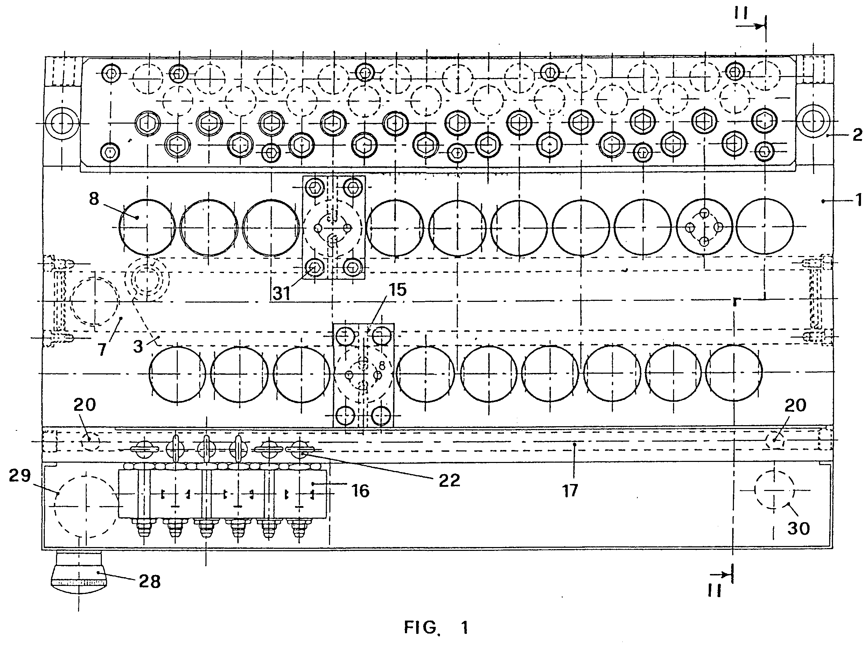

La disposition longitudinale des vannes est illustrée en fig. 1.

Fig. 2 montre la pièce 1 suivant une coupe en escalier sur laquelle on peut voir deux corps de vanne, celui de gauche avec les anneaux de guidage et de fermeture coupés et celui de droite avec ces organes non coupés.

Dans la pièce 1 est ménagée la chambre d'alimentation d'air 3 qui, par le conduit 5, alimente la vanne à tiroir 4.

Toutes les vannes reçoivent de l'air à partir de la chambre 3 faisant office de collecteur.

Chaque vanne de la rangée de gauche est alimentée individuellement par un conduit 5, tandis que les vannes de la rangée de droite sont alimentées par paire par le moyen d'un conduit commun qui prélève l'air également de la chambre ou collecteur 3.

En enlevant le bouchon référencé 6, il est en outre possible de monter un manchon approprié de liaison communiquant avec le conduit 5 en vue d'alimenter la vanne 4 avec de l'air qui ne vient pas du collecteur 3, de façon à pouvoir présenter une pression différente. De ce fait, toutes les vannes disposées à gauche en fig. 2 peuvent comporter une alimentation directe indépendante du collecteur 3, tandis que les vannes prévues à droite en fig. 2 peuvent avoir une alimentation directe indépendante par paire.

Cette caractéristique permet de travailler avec des pressions différentes suivant les vannes.

Dans la pièce 1 est encore prévu un collecteur 7 qui fait fonction de refoulement commun pour toutes les vannes à tiroir 4. Ce collecteur permet d'envoyer des jets d'air de refoulement en dehors de la machine de formation, de façon à améliorer l'ambiance de travail et de réduire le bruit produit par la machine.

La vanne à tiroir 4 est logée dans une cavité cylindrique 8, également pratiquée dans la pièce 1. A l'intérieur de cette cavité sont disposés deux anneaux 9 et 10 ayant pour fonction d'assurer le guidage et l'étanchéité de la vanne à tiroir 4.

Dans la partie inférieure de cette vanne est prévue une chambre de commande 13 pour le piston 32 tandis que dans la partie supérieure agit un ressort 14 qui rappelle la vanne à la position de repos. Cette vanne est réalisée en alliage léger de façon à améliorer la vitesse de commutation ; en outre l'étanchéité est opérée à l'aide d'un polymère vulcanisé spécial prévu sur le tiroir de la vanne.

La cavité 8 est reliée à la lumière d'alimentation 5, à la lumière d'utilisation 12 et à la lumière de refoulement 11. Les positions de travail de la vanne sont les suivantes :
- vanne non commandée : utilisation - refoulement
- vanne commandée : alimentation - utilisation.

La cavité 8 qui renferme la vanne est fermée vers le haut par un couvercle en acier 15 blocqué parmi les vis 31 qui contre-balance l'effort de compression développé par le ressort 14, tout en permettant la surveillance rapide du corps de vanne. Dans ce couvercle 15 sont en outre prévus deux trous qui sont fermés par un bouchon en bronze synthétisé et qui font fonction d'évents pour la chambre de travail du ressort.

La vanne à tiroir 4 est commandée pneumatiquement par le moyen de l'électro-vanne pilote 16, laquelle, actionnée par voie électro-magnétique, est propre à envoyer une impulsion d'air de commande provenant d'un collecteur commun d'air 17 jusqu'à la vanne à tiroir 4 en vue d'assurer l'actionnement de celle-ci.

L'air de commande sort du collecteur 17 associé à la vanne à tiroir 4 par le moyen d'un conduit 18 qui relie la chambre de commande 13 de ladite vanne à la chambre 19 de l'obturateur de l'électro-vanne pilote 16.

Le collecteur 17 pour l'air d'actionnement est commun à toutes les électro-vannes pilotes et il est alimenté en air comprimé par un conduit d'entrée 20 qui peut être disposé aussi bien sur le côté droit que sur le côté gauche de l'ensemble (voir fig. 1).

La structure de la vanne à tiroir 4 (fig. 2) est telle que l'air d'actionnement peut se trouver à une pression égale ou légèrement inférieure à celle de l'air d'utilisation.

L'électro-vanne pilote 16 comporte un noyau cylindrique dont l'extrémité porte une garniture 21 propre à fermer l'alimentation du conduit d'air d'actionnement. Lorsque la bobine de l'électro-vanne est excitée, le noyau se déplace axialement en libérant le passage de l'air d'actionnement à l'intérieur du conduit d'alimentation 18 associé à la vanne à tiroir 4.

Les électro-aimants de toutes les vannes d'actionnement 16 sont excités de manière séquentielle par un programmateur électronique qui n'a pas été illustré sur le dessin. Chaque vanne d'actionnement peut être actionnée manuellement à l'aide d'un dispositif comprenant un petit arbre 22 portant à son extrémité une dent 23 qui, sous l'effet d'une rotation de 90° dudit arbre, engendre le déplacement du noyau cylindrique qui porte la garniture 21, en permettant de la sorte la commande de la vanne à tiroir 4.

Un ressort monté co-axialement par rapport au noyau cylindrique ramène la vanne à la position de fermeture lorsque l'actionnement manuel est interrompu.

Au cours de la rotation de 90° du petit arbre 22 en vue de la commande manuel le, un ergot 24 vient actionner un micro-interrupteur 33 qui assure l'arrêt de toutes les alimentations électriques de l'ensemble, en s'opposant ainsi à ce qu'au cours du fonctionnement manuel d'une électro-vanne de pilotage, tes autres vannes puissent continuer à être alimentées périodiquement par le programmateur électronique.

La pièce 2 regroupe toutes les vannes de réglage pour l'air d'utilisation ou de refoulement obtenu à l'aide de chaque vanne à tiroir 4. Le conduit 12 de la pièce 1 communique directement avec la pièce 2, laquelle est représentée en fig. 2 avec deux vannes en coupe, à savoir une vanne à aiguille 25 et une vanne à billes 26.

Lorsque la vanne à tiroir 4 n'est pas pilotée, le conduit 12 fait fonction de conduit de refoulement pour le mécanisme et l'air sort à travers la vanne pour pénétrer dans la chambre 7.

Lorsque la vanne à tiroir 4 est commandée, le conduit 12 fait fonction de conduit d'utilisation pour le mécanisme, et l'air sous pression provenant du collecteur 3 traverse la vanne pour pénétrer dans le conduit 12 qui l'envoie au mécanisme.

Dans la réalisation illustrée en fig. 2, l'air qui est envoyé pour l'actionnement du mécanisme traverse pour sa plus grande partie la vanne à bille 26 en étant de la sorte soumis à des pertes de charge moins importantes, tandis que l'air de refoulement du mécanisme traverse dans sa totalité la vanne à aiguille 25 qui de la sorte fait fonction de vanne régulatrice du débit de refoulement.

Si au lieu de la vanne à bille 26 est montée une vanne à plateau soutenue par un ressort prenant appui sur l'obturateur inférieur 27, l'air employé passe totalement à travers la vanne à aiguille 25 alors que l'air de refoulement traverse dans sa majeure partie ladite vanne à plateau.

En pareil cas, la vanne à aiguille sert de régulateur de débit pour l'air utilisé par le mécanisme.

Dans le distributeur qui vient d'être décrit, la pièce 1 qui porte les vannes est réalisée en un alliage d'aliminium, tandis que la pièce 2 est en acier. Tout l'ensemble de vannes constitue un bloc unique auquel sont incorporés les collecteurs d'air d'alimentation, de refoulement et d'actionnement ; en outre, les matériaux employés pour la réalisation des vannes sont en mesure de supporter des températures de fonctionnement de l'ordre de 120°C.

La réalisation sous forme d'un bloc permet de réduire considérablement l'encombrement du distributeur, lequel a été conçu de façon à être susceptible d'être appliqué à toutes les machines linéaire de formation de verre creux qui utilisent un distributeur à fonctionnement mécanopneumatique ou électro-pneumatique de construction quelconque.

Toutes les vannes à tiroir travaillent à la verticale, en équilibrant de la sorte la charge sur les anneaux de guidage et d'étanchéité ; en outre, ces vannes à tiroir sont réalisées en un alliage d'aluminium sur lequel on a vulcanisé un polymère pour assurer l'étanchéité.

Chacune des rangées des vannes d'utilisation ou de refoulement comporte une vanne de régularisation de débit, en vue d'améliorer les conditions de travail du mécanisme d'utilisation. La fixation de l'ensemble sur le support du poste de travail de la machine est obtenue par exemple à l'aide de quatre vis qui permettent le remplacement aisé de l'ensemble complet. En outre, la pièce porte-vannes comporte deux connecteurs électriques 29 et 30 destinés à l'actionnement des électrovannes, ainsi que les raccords pour l'air d'alimentation, pour l'air de refoulement et pour l'air d'actionnement.

Sur la partie avant est monté un poussoir de sécurité 28 en forme de champignon, qui permet la coupure électrique rapide de tout l'appareil.

On notera qu'avec la fermeture complète de la vanne à aiguille 25, compatible avec les conditions de travail, la lumière de sortie de la vanne à bille et de la vanne à plateau 26 garantit une section équivalente à celle du conduit d'utilisation ou de refoulement 12.

La circulation de l'air de refoulement à l'intérieur d'un collecteur unique ainsi que la possibilité de guider cet air jursqu'en un point éloigné de la machine permettent de réduire dans une mesure considérable le bruit de fonctionnement de l'ensemble.

## Revendications

1. Distributeur électro-pneumatique destiné aux machines pour la réalisation d'objets creux en verre du type mécanique connues sous la désignation "I.S." duquel la partie pneumatique est réalisée sous la forme d'un bloc (1) en alliage léger à l'intérieur duquel sont montées deux rangées de vannes à tiroir (4) à orientation de travail verticale, qui sont susceptibles d'être extraites séparément de la partie supérieure du bloc moyennant le simple retrait d'un couvercle en acier (15) correspondant lequel, fixé à l'aide de vis (31), ferme la cavité cylindrique supérieure formant logement pour chaque vanne à tiroir, les électro-vannes d'actionnement (16) propres à commander les vannes à tiroir (4) correspondantes étant montées à l'extérieur du bloc (1), qui aussi comprend un collecteur d'air d'alimentation (3) ed un collecteur de refoulement (7), ces derniers étant communs à toutes les vannes, ainsi qu'un collecteur d'air d'actionnement (17) commun à toutes les électro-vannes d'actionnement (16).

2. Distributeur suivant la revendication 1, caractérisé en ce qu'à chaque vanne à tiroir (4) est associée une vanne (25) pour le réglage du débit de l'air d'utilisation ou de l'air de refoulement sortant de ladite vanne.

3. Distributeur suivant l'une quelconque des revendications 1 et 2, caractérisé en ce qu'il est établi pour permettre d'alimenter directement avec de l'air indépendant toutes les vannes à tiroir de la rangée interne et, par paire, les vannes de la rangée externe, et ce grâce à l'ouverture d'un bouchon obturateur (6).

4. Distributeur suivant l'une quelconque des revendications 1 à 3, caractérisé en ce qu'il permet la commande manuelle de chaque électrovanne d'actionnement (16) à l'aide d'un dispositif de levier (22) propre à actionner l'oturateur de l'électro-vanne (21).

5. Distributeur suivant l'un quelconque des revendication 1 à 4, caractérisé en ce que la commande manuelle de l'une quelconque des vannes d'actionnement (16) provoque, moyennant commande d'un micro-interrupteur (33), le sectionnement électrique de tout l'appareil en s'opposant à ce qu'au cours de la manoeuvre manuelle de l'une des vannes, les autres puissent être actionnées par le programmateur électronique.

6. Distributeur suivant l'une quelconque des revendications 1 à 5, caractérisé en ce que les vannes à tiroir (4) comportent de larges sections de passage, de la même manière que des vannes à bille (26) et des vannes à plateau associées à la vanne (25) pour le réglage du débit de l'air d'utilisation, ceci en vue de réduire au strict minimum les pertes de charge et de permettre des débits d'air importants aptes à l'actionnement direct des mécanismes pneumatiques de la machine.

7. Distributeur suivant l'une quelconque des revendications 1 à 6, caractérisé en ce que le corps de la vanne à tiroir (4) est réalisé de manière telle que la pression qui règne dans la chambre d'alimentation lorsque la vanne est fermée détermine une poussée de fermeture sur la vanne qui s'ajoute à l'effort de fermeture développé par un ressort de rappel (14) inséré entre la vanne à tiroir et le couvercle (15).

## Claims

1. Electropneumatic distributor designed for machines for making hollow glass objects and of the mechanical type referred to as "I.S", the pneumatic part of which is produced in the form of a light alloy block (1) inside which are fitted two rows of gate stop valves (4) with a vertical working orientation, which are able to be pulled out separately from the upper part of the block simply by withdrawing a corresponding steel cover (15) which, fixed with the help of screws (31), closes the upper cylindrical cavity to form a seat for each gate stop valve, the actuating solenoid valves (16) adapted to control the corresponding gate stop valves (4) being fitted outside the block (1), which also incorporates an incoming air collector (3) and an outgoing air collector (7), these latter being common to all the valves, as well as an actuating air collector (17) common to all the actuating solenoid valves (16).

2. Distributor according to claim 1, characterised in that with each gate stop valve (4) there is associated a valve (25) for regulating the flow rate of the air being used or the outgoing air emerging from the said valve.

3. Distributor according to either of claims 1 and 2, characterised in that it is configured to allow all the gate stop valves of the internal row and, pairwise, the valves of the external row, to be directly supplied with independent air, by virtue of a closure stopper (6) being opened.

4. Distributor according to any of claims 1 to 3, characterised in that it allows manual control of each actuating solenoid valve (16) with the help of a lever device (22) adapted to actuate the stopper of the solenoid valve (21).

5. Distributor according to any of claims 1 to 4, characterised in that the manual control of any one of the actuating valves (16) causes, by operating a micro-switch (33), the electrical isolation of the entire machine by an operating configuration such that while one of the valves is being operated manually, the others can be actuated by the electronic programmer.

6. Distributor according to any of claims 1 to 5, characterised in that the gate stop valves (4) have broad flow sections, as do ball valves (26) and plate valves associated with the valve (25) for regulating the flow rate of the air used, the latter for the purpose of reducing to an absolute minimum the losses of potential and of permitting large airflow rates suited to direct actuation of the pneumatic mechanisms of the machine.

7. Distributor according to any of claims 1 to 6, characterised in that the body of the gate stop valve (4) is realised such that the pressure prevailing in the supply chamber when the valve is shut determines a closure thrust on the valve which combines with the closure load developed by a return spring (4) inserted between the gate stop valve and the cover (15).

## Patentansprüche

1. Elektropneumatischer Verteiler für Maschinen zur Herstellung von Hohlglasgegenständen des mechanischen Typs, die unter der Bezeichnung "I.S." bekannt sind, deren pneumatischer Teil in Form eines Blockes (1) aus einer Leichtmetall-Legierung ausgebildet ist, in dessen Innerem zwei Reihen von Absperrventilen (4) angeordnet sind bei vertikaler Arbeitsorientierung, die getrennt voneinander aus dem oberen Teil des Blockes herausgenommen werden können, indem einfach ein mittels Schrauben (31) befestigter Stahldeckel (15) abgenommen wird, der die den Sitz für jedes Absperrventil bildende obere zylindrische Ausnehmung abschließt, wobei die Elektro-Antriebsventile (16) zur Steuerung der entsprechenden Absperrventile (4) an der Außenseite des Blockes (1) montiert sind, der zusätzlich einen Sammler für die Luftzufuhr (3) sowie einen Sammler zur Rückführung (7) enthält, wobei die letztgenannten Sammler sämtlichen Ventilen gemeinsam sind, sowie einen Sammler mit Antriebsluft (17), der allen Elektro-Antriebsventilen (16) zugeordnet ist.

2. Verteiler nach Anspruch 1, dadurch gekennzeichnet, daß jedem Absperrventil (4) ein Ventil (25) zur Regelung der das Ventil verlassenden Betriebsluft oder Rückführungsluft angeschlossen ist.

3. Verteiler nach einem der Ansprüche 1 und 2, dadurch gekennzeichnet, daß alle Absperrventile der inneren Reihe und paarweise die Ventile der äußeren Reihe direkt mit unabhängiger Luft beaufschlagt werden, und zwar durch Öffnung einer Verschlußdichtung (6).

4. Verteiler nach einem der Ansprüche 1 bis 3, dadurch gekennzeichnet, daß dieser die Handsteuerung jedes Elektro-Antriebsventils (16) mittels einer Hebelanordnung (22) gestattet, die dazu dient, den Verschlußbolzen des Elektroventils (21) zu betätigen.

5. Verteiler nach einem der Ansprüche 1 bis 4, dadurch gekennzeichnet, daß die Handsteuerung eines beliebigen Antriebsventils (16) durch Steuerung eines Mikro-Unterbrechers (33) die elektrische Stromkreisunterbrechung der gesamten Anlage hervorruft, indem sie verhindert, daß während der Handsteuerung eines der Ventile die anderen durch den elektronischen Programmregler angetrieben werden können.

6. Verteiler nach einem der Ansprüche 1 bis 5, dadurch gekennzeichnet, daß die Absperrventile (4) große Durchflußabschnitte besitzen in gleicher Weise wie die Kugelventile (26) und Scheibenventile, die dem Ventil (25) zur Regelung der Durchflußmenge der Betriebsluft angeschlossen sind, zur Reduzierung der Druckverluste auf ein striktes Minimum und um beträchtliche Luftmengen zu gewährleisten, die imstande sind, die pneumatischen Mechanismen der Maschine direkt anzutreiben.

7. Verteiler nach einem der Ansprüche 1 bis 6, dadurch gekennzeichnet, daß der Körper des Absperrventils (4) so ausgebildet ist, daß der in der Zufuhrkammer bei geschlossenem Ventil herrschende Druck einen Schließdruck auf das Ventil ausübt, der die durch eine zwischen dem Absperrventil und dem Deckel (15) angeordnete Rückholfeder (14) ausgeübte Schließwirkung zusätzlich verstärkt.
